# EUROPEAN PATENT SPECIFICATION

(11) **EP 2 321 361 B1**
(45) Date of publication and mention of the grant of the patent: **21.08.2013**
(21) Application number: 09780621.0
(22) Date of filing: 15.07.2009
(51) Int. Cl.: C08G 18/66, C09D 175/08, C14C 11/00, C08G 18/08, C08G 18/48, C08G 18/75, C08G 18/10, C08G 18/12, C08G 18/32, C08G 18/38

(54) **ANIONIC POLYURETHANE AQUEOUS DISPERSIONS**
ANIONISCHE WÄSSRIGE POLYURETHANDISPERSIONEN
DISPERSIONS AQUEUSES DE POLYURÉTHANES ANIONIQUES

(30) Priority: 08.08.2008 IT VA20080046
(43) Date of publication of application: 18.05.2011
(73) Proprietor: Lamberti Spa, 21041 Albizzate (IT)
(72) Inventor: COSTA, Gabriele, I-20026 Novate Milanese (IT); AMICI KROUTILOVA, Irena, I-28040 PARLIZZARO (NO) (IT); MERCATALI, Stefania, I-36030 Costabissara (VI) (IT); LI BASSI, Giuseppe, I-21026 Gavirate (VA) (IT)
(74) Representative: Giaroni, Paola
(86) International application number: PCT/EP2009/059051
(87) International publication number: WO 2010/015494

(56) References cited:
- WO-A-2008/084041
- US-A- 6 077 897

## Description

The present invention relates to aqueous anionic polyurethane dispersions and to their use as filming agents for the coating of rigid or flexible objects in order to obtain opaque, soft-touch surfaces.

The aqueous dispersions of the invention can be used in the finishing of leather, for the superficial treatment of fabrics, paper, cardboard, plastic, wood and metals.

According to one of the fundamental aspects of the present invention the procedure of preparation of such aqueous polyurethane dispersions is described.

These dispersions are completely free from solvents and from the normally used opacifying additives, such as silica, silicates or polymeric particles.

### STATE OF THE ART.

The surface of many manufactured articles, by way of example made from woven fabrics, leather, paper, plastic, wood and metal, is treated with the purpose of making it more homogenous, or of protecting it from the wear of the time or the atmosphere and/or in order to improve the certain aesthetic properties, such as high or low opacity, soft or rough touch, different colours, and so on.

Normally these effects are obtained through the application of dispersions of polymers containing several specific additives, as reported for example in "Tanning - dyeing - finishing" 4th edition, Bayer AG, p. 175-185 (1986).

In case of polyurethane dispersions, a greater opacity can be obtained, by way of example, by the addition of opacifying particles. These opacifying particles can be silica particles, as described in patent US 6,284,836, or polymer particles, as described in US 6,649,487.

Nevertheless, the addition of heterogeneous particles has the disadvantage of destabilizing the polymer compositions and of increasing the brittleness of the film.

Moreover during the application a separation of the heterogeneous materials can occur with consequent heterogeneity of the optical effect along the surface of the treated material.

The use of amorphous or crystalline silica in order to increase the degree of opacity in the final manufactured article is moreover dangerous for the operators' health, if the necessary safeguards measures are not carefully applied.

The siliceous particles, because of their extreme fineness and volatility, are in fact the object of continuous studies from national medical institutes of research for the risk of pulmonary diseases that they can provoke.

In the literature many methods are reported that avoid the use of opacifying particle; US 2006/0111538, as an example, describes the use of compositions based on a self-reticulating polyurethane that allow to obtain products with a gloss below 40.

Another superficial characteristic which is more and more appreciated by the market is the soft touch effect or velvet effect.

EP1,489,120, as an example, describes a photo-curable polyurethane emulsion which is able to produce films with good stability and soft touch. Also WO 2006/072080 describes a polyurethane formulation useful for giving a soft and silky effect ("satinized and rubberish touch") on rigid surface. To this formulation, obtained from the reaction of a lucid polyurethane dispersion with a reticulating agent, an opacifying agent (SiO₂) is added in order to obtain a coating with a low degree of gloss (see Table 1).

Document US 6 077 897 A discloses a process for producing a waterborne polyurethane dispersion prepared from a mixture of 88 g of PTMG, 32 g of IPDI, 1,2 g of DMPA which are reacted to form a prepolymer (see example 1). Then lithium diaminosulfonate is added to the prepolymer together with water to form a waterborne dispersion. However D1 is silent about the molecular weight of PTMG. oreover, the percentage of anionic polyurethane in the aqueous dispersion is not disclosed.

Document WO 2008/084041 A discloses a process for the preparation of aqueous dispersions of anionic polyurethanes free from volatile amines which are useful for the preparation of coatings for leather, paper, metals, textiles and plastics. The example VI of discloses an aqueous polyurethane dispersion obtained from PTMG (molecular weight 1000), a cycloaliphatic diisocyanate and dimethylolpropionic acid. The polyurethane prepolymer is then mixed with water and reacted with hydrazine hydrate. The medium particle size of the aqueous dispersion is 50,4 nm.

Document WO 02/090413 A1 discloses aqueous polyurethane-polyurea dispersions based on polycarbonate polyols and polytetramethylene glycol polyols, a process for their production and their use as coating compositions, in particular for flexible substrates such as textiles and leather (see p.1, 1.4-7). The example 8 discloses an aqueous polyurethane dispersion obtained from 76 mol-% of PTMG (based on PTMG and PPO), HDI and dimethylolpropionic acid. The ratio between the isocyanate groups of HDI (0,36 mol) and the sum of reactive OH groups (0,196 mol) is equal to 1,84. he polyurethane prepolymer is then mixed with water and is reacted with diaminosulfonate. Moreover, the aqueous polyurethane-polyurea is present as 40% by weight of the aqueous dispersion. However, the prepolymer of WO 02/090413 is prepared with an additional component, namely EOX polyether (a monofunctional polyethylene glycol). Moreover, WO 02/090413 is silent about the medium particle size of the dispersion.

It has now been surprisingly been found that it is possible to obtain an aqueous dispersion of an anionic polyurethane, free from organic solvents, that, without opacifying additives, is able to give durable films having high opacity and soft touch at the same time.

The coating obtained by means of the dispersion of the present invention is extremely innovative, since the high degree of opacity is obtained by means of the stable and homogenous (or easily re-dispersible) dispersion that does not develop persistent sediments over the time.

### SUMMARY OF THE INVENTION

It is a fundamental object of the present invention an aqueous dispersion containing from 20 to 50% by weight of an anionic polyurethane prepared by reacting:
a prepolymer A) containing from 5 to 25 meq/100 g dry weight of carboxylic groups obtained from:
   I) one or more aliphatic or cycloaliphatic diisocyanates;
   II) polytetramethylene glycol with molecular weight comprised between 500 and 3000 g/mol;
   III) one or more anionic or potentially anionic polyols having two or more reactive groups toward the isocyanate group and at least one carboxylic or carboxylate group;
   IV) optionally one or more nonionic polyols having two reactive hydroxy groups and a molecular weight comprised between 80 and 2000;
   V) optionally one or more nonionic polyols having more than two hydroxy groups and a molecular weight comprised between 64 and 3000,
in such proportions that: a) the ratio between isocyanate groups NCO of 1) and the sum of reactive OH groups of II), III) and IV) is between 1.2 and 2.5; b) polytetramethylene glycol represents in moles at least 70%, preferably 90%, more preferably 100% of the molar sum of components II), IV and V); c) I), II), III), IV) and V) is equal to 100% of the components of the prepolymer
with
a chain extender B) chosen among diamine sulfonate salts having one or more sulfonic acid groups.

The aqueous dispersions of the present invention have a medium particle size above 600 nm, and preferably above 1000 nm, and give films of high opacity.

The expression "films of high opacity" means films with a gloss below 10 at a angle of 60 ° measured according to the standard method ISO 2813.

Another object of the present invention is a method for the preparation of aqueous dispersions containing from 20 to 50% by weight of an anionic polyurethane, with a medium particle size above 600 nm, preferably above 1000 nm, and able to produce films of high opacity, that comprises the following steps:
i) a prepolymer A) containing from 5 for 25 meq/100 g dry weight of carboxylic groups is prepared by reacting:
   I) one or more aliphatic or cycloaliphatic diisocyanates;
   II) polytetramethylene glycol with molecular weight comprised between 500 and 3000 g/mol;
   III) one or more anionic or potentially anionic polyols having two or more groups reactive toward the isocyanate group and at least one carboxylic or carboxylate group;
   IV) optionally one or more nonionic polyols having two reactive hydroxy groups and a molecular weight between comprised 80 and 2000;
   V) optionally one or more nonionic polyols having more than two hydroxy groups and a molecular weight comprised between 64 and 3000,
      in such proportions that: a) the ratio between the isocyanate groups NCO of 1) and the sum of reactive OH groups of II), III) and
   IV) is between 1.2 and 2.5; b) the polytetramethylene glycol represents in moles at least 70%, preferably 90%, more preferably 100% of the molar sum of components II), IV and V); c) the sum of I), II), III), IV) and V) is equal to 100% of the components of the prepolymer
ii) the prepolymer is dispersed in water by stirring;
iii) a chain extender B) chosen among diamine sulfonate salts having one or more sulfonic acid groups is added to the so obtained dispersion and it is allowed to react until all isocyanate groups disappear.

According to another aspect, the invention relates to the use of the aforesaid aqueous anionic polyurethane dispersions for the coating of leather, woven fabrics, paper, cardboard, plastic, wood or metals with film of high opacity.

Example 1 of US 6,077,897 describes a process for producing a waterborne polyurethane dispersion (WPU dispersion) by reacting 88 g of polytetramethylene glycol, 32 g of IPDI (which is a cycloaliphatic diisocyanate), 1.2 g of DMPA (a potentially anionic polyol having two or more groups reactive toward the isocyanate group and one carboxylic group), adding lithium diaminosulfonate and dropping water to the resulting system.

Although the process and dispersion of Example 1 of US 6,077,897 have features in common with the process and aqueous dispersions of the present invention, as a matter of fact, in Example 1 the content of anionic polyurethane in the dispersion is not reported, nor the molecular weight of polytetramethylene glycol or the ratio between the isocyanate groups NCO and the reactive OH groups in the prepolymer, nor the amount of lithium diaminosulfonate.

Therefore Example 1 of US 6,077,897 cannot be considered as an enabling disclosure of the process and aqueous dispersions of the present invention. Furthermore, the WPU dispersion of US 6,077,897 is used to prepare WPU/PEO (polyethylene oxide) composite electrolytes and not as soft-feel opaque coating.

### DETAILED DESCRIPTION OF THE INVENTION

Examples of diisocyanates useful for the present invention are 4,4' - dicyclohexyl-methane-diisocyanate, 1-isocyanate-3-isocyanate-methyl-3,5,5-trimethylcyclohexane (or isophoronediisocyanate), hexamethylenediisocyanate, and mixtures thereof.

The preferred diisocyanates are 4,4'-dicyclohexyl-methane-diisocyanate, 1-isocyanate-3-isocyanate-methyl-3,5,5-trimethylcyclohexane (or isophoronediisocyanate) and hexamethylenediisocyanate. Polytetramethylene glycol with a molecular weight comprised between 500 and 1500 is preferred for the realization of the present invention. Component IV) of the prepolymer A) is chosen among nonionic polyols having a molecular weight comprised between 80 and 2000 g/mol. Preferably, the nonionic polyols are polyols polyethers or diols having a molecular weight below 150, like as an example propylene glycol, 1,4-butanediol, 1,6-hexanediol, neopentylglycol and mixtures thereof. Component III) of the prepolymer A) is a carboxylic acid, preferably a carboxylic acid which is substituted in the position 2 by two hydroxymethyl groups; more preferably component III) is dimethylolpropanoic acid, dimethylolbutanoic acid or mixtures thereof.

Component V) of the prepolymer A) can be chosen among polyols having a molecular weight comprised between 64 and 1500 and functionality OH greater than 2; examples of utilizable substances are glycerin, pentaerythritol, trimethylolpropane and its derivatives, such as trifunctional polypropylene glycol, trifunctional polybutadienes and polyesters.

Trifunctional polyesters can be obtained from condensation reactions of diols with mixtures of difunctional and trifunctional acids, or of polyols with diacids.

In the prepolymer A) the ratio between the isocyanate groups NCO of I) and the sum of reactive OH groups of II), III) and IV) is between 1.2 and 2.5, preferably between 1.5 and 2.4.

The amount of carboxylic groups in the polyurethane is measured in milliequivalents (meq) of groups COOH and/or COO- for 100 g of prepolymer; in the anionic polyurethanes of the present invention this value is in the range 5 to 25, preferably in the range 10 to 25, and best results as degree of opacity are obtained when this value is comprised between 10 and 20.

In the method of the present invention the stage i) is preferably carried out in absence of organic solvents at a reaction temperature between 40 and 110°C.

The prepolymer obtained at the end of stage i) is normally neutralized, preferably with tertiary amines, like N-alkylmorpholine, tri-alkylamine, alkylalkanolamine, trialkanolamine and mixtures thereof, at a temperature below 90 °C.

Triethylamine, dimethylethanolamine and N-methylmorpholine are particularly suited for this scope.

The neutralization can be carried out at the end of the reaction of synthesis of the prepolymer (step i)), in anhydrous environment, or during the subsequent dispersion in water of the prepolymer (stage ii)).

Step ii) is carried out adding the prepolymer to water (or to water and neutralizing agent) under mechanical stirring, optionally in the presence of an emulsifier.

The emulsifier can be chosen between nonionic, anionic and cationic surfactants.

Preferably the emulsifier is a nonionic surfactants.

Particular characteristic of the dispersion that is obtained at the end of step ii) is the high dimension of its particles; these in fact have a medium particle size above 600 nm, preferably above 800 nm and more preferably above 1000 nm.

The chain extender B) is a diamine sulfonate salt with one or more sulfonic acid groups neutralized and with at least 2 active hydrogens toward the NCO group, used in such amount that at least 3%, preferably from 3 to 50%, most preferably from 5 to 50%, of the free NCO groups contained in the prepolymer A) react with it; the sulfonate diamine salt can be used in mixture with a nonionic diamine with active hydrogens toward the NCO group, such as, as an example, with hydrate of hydrazine, ethylendiamine and mixtures thereof.

Particularly useful for the realization of the present invention are the diamine sulfonate of general formula X - NH - R₁-NH-R₂-SO₃⁻Y⁺, where R₁, R₂ can be the same or different and are chosen between methylene, ethylene, propylene, phenylene; X is H or - R₂SO₃⁻.

The preferred neutralizers (Y⁺) of the diamine sulfonate are sodium, lithium or potassium cations.

Step iii), the extension of chain carried out with the diamine sulfonate increases the stability and above all the re-dispersibility (in case of sediment on the bottom) of the dispersion, without changing the particle size of the dispersion of the prepolymer: this guarantees at the same time that the dispersions so prepared produce a film with high opacity. Examples of diamine sulfonate utilizable are salts of alkaline metals of 1,1-diaminomethanesulfonic acid, of 1,1- di(aminoethyl)ethanesulfonic acid, of 2-[(2-aminoethyl) amino]ethanesulfonic acid, of 3-[(2-aminoethyl)amino] propanesulfonic acid, of diaminobenzenesulfonic acids, diaminomethanesulfonic acid, 1,1-diaminopropanesulfonic acid, 1,2-diaminopropanesulfonic acid.

Preferably the component B) is chosen among sodium salts of 2-[(2-aminoethyl)amino]ethanesulfonic acid, of 3-[(2-aminoethyl) amino]propanesulfonic acid, their adduct and mixtures thereof. According to a preferred embodiment, the component B) is the sodium salt of 2-[(2-aminoethyl)amino]ethanesulfonic acid.

Step iii) of the method of the invention is carried out percolating the component B) in the dispersion of the prepolymer A), maintained under stirring, at temperature below 40 °C.

Following this procedure a milky dispersion of an anionic polyurethane with a medium particle size above 600 nm is obtained.

The particles have an elevated but controlled medium particle size that guarantees, like shown in the examples, the stability over the time or the re-dispersibility of the final dispersion.

After the extension the anionic polyurethane dispersion prepared with the procedure described above can be thickened with the addition of an opportune polymeric thickener, preferably chosen between the polyurethanes, or acrylic polymers, or derivatives of modified polysaccharides.

The expression polymeric thickener means a polymer that dosed at a concentration of 1% by weight is able to increase the Brookfield ® viscosity of its aqueous solution of at least 200 mPa*s.

The most appropriate thickeners for this invention show a pseudoplastic rheologic behavior, they are preferably associative polyurethanes or acrylic polymers at a concentration comprised between 0,1 and 5% by weight of dispersion.

This thickening guarantees a more stable dispersion increasing at the same time the degree of opacity of the films obtainable from it.

The viscosity of the anionic polyurethane aqueous dispersion of the present invention is generally comprised between 50 and 2000 mPa*s. Non-opacifying additives can be added to the so obtained anionic aqueous polyurethane dispersion in order to otherwise improve its performance, such as, as an example, its filming capacity, dimming, the development of "orange peels" effects or "fish-eyes" and foam reduction. Some of these non-opacifying additives are supplied for example by ByK Chemie or Evonik, as it is known to those skilled in the art.

Examples of levelling and anti-slip additives that can be added to the aqueous dispersion are additives of the polisiloxane or silicone type.

The aqueous dispersions of the present inventions are stable or easily re-dispersible.

The aqueous dispersions are defined stable when they remain homogenous stored in a jar closed in a oven at 50°C for 14 days.

The aqueous dispersions are defined re-dispersible when, stored in a jar closed in a oven at 50°C per14 days, they develop a sediment which is dispersible by the simple manual shaking of the jar.

The anionic polyurethane aqueous dispersions of the present invention can be reticulated with all reticulating agents known to those skilled in the art, such as with hydrodispersible polyisocyanates, polyaziridines, carbodiimides, epoxysilanes.

Reticulating agents are generally added in an amount comprised between 1 and 10% on dry weight of the dispersion.

The cross-linking does not modify the opacity of the films that are obtained from the dispersions, but can be useful in order to increase the mechanical and chemical properties of the films.

After spray application on black polish card, the film forming anionic polyurethane aqueous dispersions of the present invention have gloss below 10, measured at 60° as indicated in the standard method ISO 2813, and are advantageously utilisable in the finishing of leather, in the superficial coating of woven fabrics and paper and in the coating of plastics, such as polycarbonates and PVC, wood and metals.

The materials coated with films obtained from the aqueous dispersions of the invention can be used on car interiors to cover the instrumentations or of the internal side of car doors, on electronic products like mobile phones, i-pod® and PDA.

The films obtained from the dispersions, by applying at least 3 g/m², preferably from 5 to 10 g/m² of anionic polyurethane, show high opacity and soft touch, without using solid opacifying additives.

In the examples that follow the preparation of aqueous dispersions according to the present invention (Example I-a and I-b) and aqueous dispersions prepared using components or amount of reagents different from those indicated in the present invention (Examples from II to V) is reported.

The particle size of the dispersions has been measured by means of Laser Correlation Spectroscopy (LCS) with a Coulter N4 Plus at temperature 25°C and angle 90°.

The dry matter has been determined with an IR dryer, Mettler Toledo HB 43, at a temperature of 160°C.

The quality of the process is determined also by filtrating the final dispersion with a 300 micron canvas; the behaviour during the filtration has been classified with a scale 1-3(1 - without residues, fast; 2 - thin residues, 3 - film forming residues).

The stability has been determined by means of an aging test in oven for 14 days at 50°C and classified with a scale from 1 to 4 (1 - stable, 2 - sediment, 3 - sediment and partial water separation, 4 - total separation) The re-dispersibility of the dispersion has also been estimated after the aging test in oven (yes = dispersed after manual shaking of the jar, no= not dispersed after manual shaking of the jar).

The gloss has been determined by means of application on a black card and measured at 60°, following the ISO standard method indicated above.

In an applicative example the comparison between the results of a finishing treatment on a leather substrate carried out using a commercial product combined with an opacifying silica or with the dispersion obtained in the I-a example like from invention is showed. The resistance to wet and dry rubbing, the resistance to folding, the point of black, the gloss and the soft-feel effect have been determined.

The resistances to wet and dry rubbing have been determined with a VESLICRUB FASTENSS TESTER VESLIC I.U.F. /450 following the standard method ISO 11640.

In the fold test the skin piece is folded repeatedly after drying in order to estimate stickiness and bleaching.

Opacity is determined as gloss at an angle of 60°.

The soft feel effect is determined by a panel test.

### EXAMPLES

The following materials, as listed bellow, were used in the examples described afterwards.

Macrodiol 1 = poly(tetramethylene ether) glycol, molecular weight 1000 g/mol.

Macrodiol 2 = polypropylene glycol, molecular weight 1000.

Macrodiol 3 = poly(adipate-phthalate-1.6-hexane)diol, molecular weight 1000,

Acid = dimethylolpropanoic acid, molecular weight 134.20,

Diisocyanate = isophorone diisocyanate, molecular weight 222.30 (IPDI), Diamine 1 = hydrazine hydrate, PM 32.01 (II),

Diamine 2 = 2-[(2-aminoethyl)amino]ethanesulfonic acid, PM 222 (EVS), sodium salt

Thickener 1 = polyacrylic, SIPACRIL 2723 OF, (Lamberti SpA, Italy) Thickener 2 = polyurethane, VISCOLAM 1022, (Coatex, France)

Silica = LAMFILLER 4067, amorphous silica compound, water dispersed (Lamberti SpA, Italy)

Amine = triethylamine, PM 101,15 (TEA)

Surfactant = ethoxylated linear alcohol C₁₀-C₁₆, 8 moles of ethoxy groups. EXAMPLE I-a, I-b

Preparation of an anionic dispersion according to the described procedure.

**Table 1 - Formulations (examples according to the invention)**

| | **Example I-a** | | **Example I-b** | |
|---|---|---|---|---|
| | g | mmol | g | mmol |
| MACRODIOL 1 | 181.8 | 220 | 181.8 | 220 |
| MACRODIOL 2 | - | - | - | - |
| ACID | 6.9 | 62 | 6.9 | 62 |
| DIISOCYANATE | 98.5 | 536 | 98.5 | 536 |
| WATER | 543.0 | - | 543.0 | - |
| DIAMINE 1 | 31.5 | 191 | 31.5 | 191 |
| DIAMINE 2 | 27.7 | 51 | 27.7 | 51 |
| THICKENER 1 | 20.0 | - | - | - |
| THICKENER 2 | - | - | - | - |
| Solid content, % | 32 | | 32 | |
| Rₘ (NCO/OH) | 1.9 | | 1.9 | |
| meq/100 g of solid | 16.5 | | 16.5 | |

181.8 g (220 mmol) of Macrodiol, 6.9 g (62 mmol) of Acid and 0.1 g of phosphoric acid (concentration 85 %) are loaded in a reactor equipped with thermometer, stirrer and condenser, under nitrogen atmosphere and at room temperature.

98.5 g (536 mmol) of Diisocyanate are added under stirring after approximately 10 minutes of homogenization of the mixture at 40°C.

The reaction mixture is then heated up and maintained for 60 minutes at 60°C.

The reaction is carried out at 80°C, until the content of NCO groups in the prepolymer is 6.12%.

The titration of the residual isocyanate groups has been determined in this and all the other examples according to the norm ASTM D2572.

Once reached the required value of NCO groups the prepolymer is cooled down.

At approximately 75°C 5.3 g of neutralizing agent Triethylamine (62 mmol) are added under stirring.

After about 10 minutes, the prepolymer is dispersed in 543 g of demineralized water under strong stirring and temperature below 35°C. The extension is carried out adding Diamine 1 and Diamine 2 as described in Table 1 at temperature below 35°C.

The obtained polyurethane dispersion is then filtered with a 300 µm canvas and brought to a dry content of 32% (Example I-b). In the Example I-a, before being filtered, the dispersion is thickened with 20.0 g of Thickener 1 diluted in water 1/4.

### EXAMPLES II - V

The procedure described in the Example I-a is followed, but modifying the ratios and the raw materials as shown in Table 2.

The obtained dispersions are thickened with 15.0 g of Thickener 1.25% in water, and 5.0 g of Thickener 2.

The diameter of the particles, the solids content, the quality of the filtration, the stability and the re-dispersibility of the obtained dispersions and the gloss at 60° of films on a glossy-black carton are reported in Table 3.

**Table 2 - (comparative Examples II-V)**

| | **Example II** | | **Example III** | | **Example IV** | | **Example V** | |
|---|---|---|---|---|---|---|---|---|
| | g | mmol | g | mmol | g | mmol | g | mmol |
| MACRODIOL 1 | 212.5 | 220 | - | - | 199.2 | 119 | - | - |
| MACRODIOL 2 | - | - | 212.3 | 220 | - | - | - | - |
| MACRODIOL 3 | - | - | - | - | - | - | 212.0 | 220 |
| ACID | 7.8 | 55 | 7.8 | 60 | 15.3 | 68 | 7.8 | 60.0 |
| DIISOCYANATE | 112.0 | 522 | 114.1 | 532 | 125.3 | 337 | 114.0 | 532 |
| WATER | 602.4 | - | 612 | - | 565.8 | - | 569.8 | - |
| DIAMINE 1 | 49.8 | 247 | 38.0 | 189 | 34.0 | 97 | 40.5 | 202 |
| DIAMINE 2 | - | - | 32.1 | 50 | 49.6 | 45 | 24.1 | 38 |
| THICKENER 1 | 15.0 | - | 15.0 | - | 15.0 | - | 15.0 | - |
| THICKENER 2 | 5.0 | - | 5.0 | - | 5.0 | - | 5.0 | - |
| Solid content, % | 32 | | 32 | | 32 | | 32 | |
| Rₘ (NCO/OH) | 1.9 | | 1.9 | | 1.8 | | 1.9 | |
| meq/100 g of solid | 15.1 | | 16.5 | | 32.5 | | 16.5 | |

The prepolymers of examples IV and V were prepared with 4% of solvent (N-methylpyrrolidone).

**Table 3 - Characteristics of the dispersions**

| **Example** | **I-a** | **I-b** | **II** | **III** | **IV** | **V** |
|---|---|---|---|---|---|---|
| PARTICLES DIAMETER, nm | 1300 | 1200 | 850 | 85 | 55 | 70 |
| SOLID CONTENT, % | 32 | 32 | 32 | 32 | 32 | 32 |
| FILTRATION * | 1 | 1 | 3 | 3 | 1 | 1 |
| STABILITY ** | 1 | 2 | 3 | 3 | 1 | 1 |
| RE-DISPERSIBILITY *** | - | yes | not | yes | - | - |
| GLOSS 60° | 0,5 | 0,6 | 0,6 | 25,5 | 79,6 | 18,7 |

| | | | | | | |
|---|---|---|---|---|---|---|
| * 1 - without residue, fast, 2 - fine residue, 3 - film-forming residue ** 1 - stable, 2 - sediment, 3 - sediment and partial water separation, 4 - coagulation, total separation *** yes - after manual shaking of the jar, not - does not re-disperse after manual shaking of the jar | | | | | | |

### APPLICATION EXAMPLE

The mechanical properties of two leathers treated with polyurethane dispersions were compared. The dispersions used were: i) glossy polyurethane dispersion - commercial product of Lamberti SpA (Rolflex D148) mixed with 3 wt.% of silica with respect to the dry content of the dispersion (Leather 2) and ii) the same Rolflex D148 with addition of the dispersion obtained in Example I-a (Leather 1). The amount of the dispersion obtained in Example I-a used for the Leather 1 is in order to obtain two leathers with the same degree of opacity.

The leather treated with the opacifying dispersion I-a shows better properties in comparison to the standard opacifying agent based on silica, in particular for rubbing fastness, both dry and wet, and the resistance to folding (see Table 4).

**Table 4 - Comparison between the properties of leather treated with the resin containing opacifying agent according to the invention and the standard one based on silica.**

| **Example** | **Leather 1** | **Leather 2** |
|---|---|---|
| Rubbing fastness (dry) after 50 rubbings | not polished | polished |
| Rubbing fastness (wet) | 160 | 100 |
| Resistance to folding | +1 | 0 |
| Touch | soft | soft |

| | | |
|---|---|---|
| 0 ... similar to the comparative sample +1 ... better than the comparative sample | | |

## Claims

1. Aqueous dispersion having medium particle size above 600 nm containing from 20 to 50% by weight of an anionic polyurethane prepared by reacting ;
an anionic prepolymer A) containing from 5 to 25 meq/100 g dry matter of carboxylic groups prepared from:
I) one or more aliphatic or cycloaliphatic diisocyanates;
II) polytetramethylene glycol with molecular weight comprised between 500 and 3000 g/mol;
III) one or more anionic or potentially anionic polyols having two or more reactive groups toward the isocyanate group and at least one carboxylic or carboxylate group;
IV) optionally one or more nonionic polyols having reactive two hydroxy groups and molecular weight comprised between 80 and 2000;
V) optionally one or more nonionic polyols having more than two hydroxy groups and molecular weight comprised between 64 and 3000,
in such proportions that: a) the ratio between isocyanate groups NCO of 1) and the sum of reactive OH groups of II), III) and IV) is between 1.2 and 2.5; b) polytetramethylene glycol represents in moles at least 70% of the molar sum of components II), IV and V); c) the sum of I), II), III), IV) and V) is equal to 100% of the prepolymer components
with
a chain extender B) chosen among diamine sulfonate salts having one or more sulfonic acid groups.

2. Aqueous dispersion of claim 1) in which the anionic polyurethane is prepared by reacting an anionic prepolymer A) containing from 10 to 25 meq/100 g dry matter of carboxylic groups.

3. Aqueous dispersion of claim 2) in which the prepolymer A) contains from 10 to 20 meq/100 g dry matter of carboxylic groups.

4. Aqueous dispersion of any of claims from 1) to 3) in which the chain extender B) is in such an amount that at least 3% of free NCO groups in the prepolymer A) react with it.

5. Aqueous dispersion of claim 4) in which the nonionic polyols IV) are diols with a molecular weight below 150 or polyether polyols.

6. Aqueous dispersion of claims 4) or 5) in which polytetramethylene glycol represents in moles at least 90% of the molar sum of components II), IV) and V) of the prepolymer A).

7. Aqueous dispersion of claims 4) in which the polytetramethylene glycol represents in moles 100% of the molar sum of component II), IV) and V) of the prepolymer A).

8. Aqueous dispersion of claim 6) or 7) having a medium particle size above 1000 nm.

9. Aqueous dispersion of any of the previous claims containing from 0,1 to 5% by weight of a thickening polymer.

10. Method for the preparation of aqueous dispersions containing from 20 to 50% by weight of an anionic polyurethane having medium particle size above 600 nm and able to produce films of high opacity that comprises the following steps;
i) a prepolymer A) is prepared containing from 5 for 25 meq/100 g of carboxylic groups reacting:
I) one or more aliphatic or cycloaliphatic diisocyanates;
II) polytetramethylene glycol with molecular weight comprised between 500 and 3000 g/mol;
III) one or more anionic or potentially anionic polyols having two or more groups reactive toward the isocyanate group and at least one carboxylic or carboxylate group;
IV) optionally one or more nonionic polyols having two reactive hydroxy groups and a molecular weight between comprised 80 and 2000;
V) optionally one or more nonionic polyols having more than two hydroxy groups and a molecular weight comprised between 64 and 3000,
in such proportions that: a) the ratio between the isocyanate groups NCO of 1) and the sum of reactive OH groups of II), III) and
IV) is between 1.2 and 2.5; b) the polytetramethylene glycol represents in moles at least 70%, preferably 90%, more preferably the 100% of the molar sum of components II), IV and V); c) the sum of I), II), III), IV) and V) is equal to 100% of the components of the prepolymer
ii) the prepolymer is dispersed in water under stirring;
iii) a chain extender B) chosen among diamine sulfonate salts having one or more sulfonic acid groups is added to the dispersion so obtained in such an amount that at least 3% of free NCO groups in the prepolymer A) react with it and it is allowed to react until all the isocyanate groups disappear.

11. Method for the preparation of aqueous dispersions of claim 10) in which the prepolymer A) prepared in step i) contains from 10 to 25 meq/100 g of carboxylic groups.

12. Method for the preparation of aqueous dispersions of claim 11) in which the prepolymer A) prepared in step i) contains from 10 to 20 meq/100 g of carboxylic groups.

13. Method for the preparation of aqueous dispersions of any of claims from 10) to 12) in which in step iii) the chain extender B) is added in such an amount that between 3 and 50% of free NCO groups contained in the prepolymer A) react with it.

14. Method for the preparation of aqueous dispersions of claim 13) in which in step iii) the chain extender B) is added in such an amount that between 5 and 50% of free NCO groups contained in the prepolymer A) react with it.

15. Use of aqueous dispersions as described in claims from 1) to 9) for the coating of leather, fabrics, paper, cardboard, plastic, wood or metals with films of high opacity.

## Patentansprüche

1. Wässrige Dispersion mit einer durchschnittlichen Partikelgröße von mehr als 600 nm sowie einem Anteil von 20 bis 50 % des Gewichts eines anionischen Polyurethans, gebildet durch die Reaktion:
eines anionischen Prepolymers A) bestehend aus einem 5 bis 25 meq/100 g Trockenanteil von Carboxygruppen, die hergestellt wurden aus:
I) einer oder mehreren aliphatischen oder zykloaliphatischen Diisocyanaten.
II) Polytetramethylenglykol mit einem Molekulargewicht zwischen 500 und 3000 g/mol;
III) einem oder mehreren anionischen oder potentiell anionischen Polyolen mit zwei oder mehreren zur Isozyanatgruppe reaktiven Gruppen und mindestens einer Carboxy- oder Carboxylatgruppe;
IV) optional einer oder mehreren nichtionischen Polyolen mit zwei reaktiven Hydroxygruppen und einem Molekulargewicht zwischen 80 und 2000;
V) optional einer oder mehreren nichtionischen Polyolen mit mehr als zwei Hydroxygruppen und einem Molekulargewicht zwischen 64 und 3000,
in solchen Anteilen, dass: a) das Verhältnis zwischen den Isozyanatgruppen NCO von 1) und die die Summe der reaktiven OH-Gruppen von II), III) und IV) zwischen 1,2 und 2,5 % liegt; b) das Polytetramethylenglykol in den Molen mindestens 70 % der molaren Summe der Bestandteile II), IV und V) darstellt; c) die Summe von 1), II), III), IV) und V) gleich 100 % der Bestandteile des Prepolymers ist, und
B) ein Kettenverlängerer ist, der unter Diaminsulfonatsalzen mit einer oder mehreren Sulfonsäuregruppen gewählt wurde.

2. Wässrige Dispersion gemäß Patentanspruch 1), bei der das anionische Polyurethan durch die Reaktion eines anionischen Prepolymers A) hergestellt wird, das 10 bis 25 meq/100 g Trockenanteile von Carboxylgruppen enthält.

3. Wässrige Dispersion gemäß Patentanspruch 2, bei der das Prepolymer A) 10 bis 20 meq/100 g Trockenantelle von Carboxylgruppen enthält.

4. Wässrige Dispersion eines beliebigen der Patentansprüche von 1) bis 3), bei der der Kettenverlängerer B) einen solchen Umfang hat, dass mindestens 3 % freier NCO-Gruppen im Prepolymer A) damit reagleren.

5. Wässrige Dispersion gemäß Patentanspruch 4), bei der die nichtionischen Polyole IV) Diole mit einem Molekulargewicht von weniger als 150 oder Polyätherpolyole sind.

6. Wässrige Dispersion gemäß den Patentansprüchen 4) oder 5), bei der das Polytetramethylenglykol in den Molen mindestens 90 % der Molsumme der Bestandteile II), IV) und V) des Prepolymers A) bildet.

7. Wässrige Dispersion gemäß Patentanspruch 4), bei der das Polytetramethylenglykol in den Molen 100 % der Molsumme oder der Bestandteile II), IV) und V) df des Prepolymers A) bildet.

8. Wässrige Dispersion gemäß den Patentansprüchen 6) oder 7) mit einer durchschnittlichen Partikelgröße von über 1000 nm.

9. Wässrige Dispersion gemäß einem beliebigen der vorausgehenden 3 Patentansprüche, die 0,1 bis 5 % des Gewichts ein Verdickungspolymer enthält.

10. Methode zur Herstellung wässriger Dispersionen, die 20 bis 50 % des Gewichts eines anionischen Polyurethans, mit einer durchschnittlichen Partikelgröße von über 600 nm enthält und zur Erzeugung von Schichten mit hoher Deckkraft in folgenden Schritten angewendet werden kann:
i) Herstellung eines Prepolymers A), das 5 bis 25 meq/100 g Carboxylgruppen enthält, die reagieren mit:
I) einem oder mehreren aliphatischem oder zykloaliphatischen Diisocyanaten;
II) Polytetramethylenglykol mit einem Molekulargewischt zwischen 500 und 3000 g/mol;
III) einem oder mehreren anionischen oder potentiell anionischen Polyolen, die eine oder mehrere gegenüber der Isozyanatgruppe reaktive Gruppen sowie mindestens eine Carboxyl- oder Carboxylatgruppe aufweisen;
IV) Optional ein oder mehrere nicht Ionische Polyole mit zwei reagierenden Hydroxygruppen und einem Molekulargewicht zwischen 80 und 2000;
V) Optional ein oder mehrere Polyole mit mehr als zwei Hydroxygruppen und einem Molekulargewicht zwischen 64 und 3000,
in solchen Anteilen, dass: a) das Verhältnis zwischen den Isozyanatgruppen NCO von 1) und der Summe der reagierenden OH-Gruppen von II), III) und IV) zwischen 1,2 und 2,5 liegt; b) das Polytetramethylenglykol In den Molen mindestens 70 %, vorzugsweise aber 90 % und noch besser 100 % der Molsumme der Bestandteile von II), IV und V) verkörpert; c) die Summe von I), II), III), IV) und V) gleich 100 % der Bestandteile des Prepolymers ist.
ii) Das Prepolymer wird in Wasser unter Rühren aufgelöst;
iii) ein Kettenverlängerer B), der unter Diaminsulfonatsalzen gewählt wurde und eine oder mehrere Sulfonsäuregruppen enthält, wird zur so hergestellten Dispersion in einer solchen Menge hinzugefügt, dass mindestens 3 % der freien NCO-Gruppen im Prepolymer A) damit reagieren und eine Reaktion möglich ist, bis alle Isozyanatgruppen verschwinden.

11. Methode zur Herstellung wässriger Dispersionen gemäß Patentanspruch 10), bei denen das in Schritt I) hergestellte Prepolymer A) 10 bis 25 meq/100 g Carboxylgruppen enthält.

12. Methode zur Herstellung wässriger Dispersionen gemäß Patentanspruch 10), bei der das in Schritt I) hergestellte Prepolymer A) 10 bis 20 meq/100 g Carboxylgruppen enthält.

13. Methode zur Herstellung wässriger Dispersionen gemäß einem beliebigen der Patentansprüche 10) bis 12), bei der in Schritt III) der Kettenverlängerer B) in einer derartigen Menge hinzugefügt wird, dass zwischen 3 und 50 % der im Prepolymer A) enthaltenen freien NCO-Gruppen damit reagieren.

14. Methode zur Herstellung wässriger Dispersionen gemäß Patentanspruch 13), bei der in Schritt III) der Kettenverlängerer B) in einer derartigen Menge hinzugefügt wird, dass zwischen 3 und 50 % der Im Prepolymer A) enthaltenen freien NCO-Gruppen damit reagieren.

15. Verwendung wässriger Dispersionen gemäß der Beschreibung in den Patentansprüchen von 1) bis 9) zur Beschichtung von Leder, Gewebe, Papier, Karton, Kunststoff, Holz oder Metallen mit einer Schicht hoher Deckfähigkeit.

## Revendications

1. Dispersion aqueuse ayant une dimension moyenne des particules supérieure à 600 nm contenant de 20 à 50 % en poids d'un polyuréthane anionique préparé en faisant réagir :
un prépolymère anionique A) contenant de 5 à 25 mEq/100 g de matière sèche de groupes carboxyliques préparé à partir de :
I) un ou plusieurs dilsocyanates aliphatiques ou cycloaliphatiques ;
II) polytrétraméthylène glycol ayant une masse moléculaire comprise entre 500 et 3000 g/mol ;
III) un ou plusieurs polyols anioniques ou potentiellement anioniques ayant au moins deux groupes réactifs envers le groupe Isocyanate et au moins un groupe carboxylique ou carboxylate ;
IV) facultativement, un ou plusieurs polyols non Ioniques ayant deux groupes hydroxy réactifs et une masse moléculaire comprise entre 80 et 2000 ;
V) facultativement, un ou plusieurs polyols non ioniques ayant plus de deux groupes hydroxy réactifs et une masse moléculaire comprise entre 64 et 3000;
dans des proportions telles que : a) le rapport entre les groupes Isocyanate NCO de I) et la somme des groupes OH réactifs de II), III) et IV) est entre 1,2 et 2,5 ; b) le polyétraméthylèneglycol représente, en moles, au moins 70 % de la somme molaire des composants II), IV) et V) ; c) la somme de I), II), III), IV) et V) est égale à 100 % des composants du prépolymère
avec un agent d'allongement de chaîne B) choisi parmi des sels diamine sulfonate ayant au moins un groupe acide sulfonique.

2. Dispersion aqueuse selon la revendication 1, dans laquelle le polyuréthane anionique est préparé en faisant réagir un prépolymère anionique A) contenant de 10 à 25 mEq/100 g de matière sèche de groupes carboxyliques.

3. Dispersion aqueuse selon la revendication 2, dans laquelle le prépolymère A) contient de 10 à 20 mEq/100 g de matière sèche de groupes carboxyliques.

4. Dispersion aqueuse selon l'une quelconque des revendications 1 à 3, dans laquelle l'agent d'allongement de chaîne B) est en une quantité telle qu'au moins 3 % des groupes NCO libres du prépolymère A) réagissent avec lui.

5. Dispersion aqueuse selon la revendication 4, dans laquelle les polyols non ioniques IV) sont des diols ayant une masse moléculaire inférieure à 150 ou des polyéther polyols.

6. Dispersion aqueuse selon la revendication 4 ou 5, dans laquelle le polytétraméthylène glycol représente, en moles, au moins 90 % de la somme molaire des composants II), IV) et V) du prépolymère A).

7. Dispersion aqueuse selon la revendication 4, dans laquelle le polytétraméthylène glycol représente, en moles, 100 % de la somme molaire des composants II), IV) et V) du prépolymère A).

8. Dispersion aqueuse selon la revendication 6 ou 7, ayant une dimension moyenne des particules supérieure à 1000 nm.

9. Dispersion aqueuse selon l'une quelconque des revendications précédentes contenant de 0,1 à 5 % en poids d'un polymère épaississant.

10. Procédé de préparation de dispersions aqueuses contenant de 20 à 50 % en poids d'un polyuréthane anionique ayant une dimension moyenne des particules supérieure à 600 nm et capables de produire des films d'opacité élevée, ledit procédé comprenant les étapes suivantes :
i) un prépolymère anionique A) contenant de 5 à 25 mEq/100 g de matière sèche de groupes carboxyliques est préparé à partir de :
I) un ou plusieurs diisocyanates aliphatiques ou cycloaliphatiques ;
II) polytétraméthylène glycol ayant une masse moléculaire comprise entre 500 et 3000 g/mol ;
III) un ou plusieurs polyols anioniques ou potentiellement anioniques ayant au moins deux groupes réactifs envers le groupe Isocyanate et au moins un groupe carboxylique ou carboxylate ;
IV) facultativement, un ou plusieurs polyols non ioniques ayant deux groupes hydroxy réactifs et une masse moléculaire comprise entre 80 et 2000;
V) facultativement, un ou plusieurs polyols non ioniques ayant plus de deux groupes hydroxy réactifs et une masse moléculaire comprise entre 64 et 3000;
dans des proportions telles que : a) le rapport entre les groupes Isocyanate NCO de I) et la somme des groupes OH réactifs de II), III) et IV) est entre 1,2 et 2,5 ; b) le polyétraméthylèneglycol représente, en moles, au moins 70 %, de préférence 90 % et idéalement 100 % de la somme molaire des composants II), IV) et V) ; c) la somme de I), II), III), IV) et V) est égale à 100 % des composants du prépolymére
ii) le prépolymère est dispersé dans de l'eau sous agitation ;
iii) un agent d'allongement de chaîne B) choisi parmi des sels diamine sulfonate ayant au moins un groupe acide sulfonique est ajouté à la dispersion ainsi obtenue en une quantité telle qu'au moins 3 % des groupes NCO libres du prépolymère A) réagissent avec lui et qu'il soit laissé réagir jusqu'à disparition de tous les groupes isocyanate.

11. Procédé de préparation de dispersions aqueuses selon la revendication 10) dans lequel le prépolymère A) préparé à l'étape i) contient de 10 à 25 mEq/100 g de groupes carboxyliques.

12. Procédé de préparation de dispersions aqueuses selon la revendication 11) dans lequel le prépolymère A) préparé à l'étape I) contient de 10 à 20 mEq/100 g de groupes carboxyliques.

13. Procédé de préparation de dispersions aqueuses selon l'une quelconque des revendications 10) à 12) dans lequel à l'étape iii), l'agent d'allongement de chaîne B) est ajouté en une quantité telle qu'entre 3 et 50 % des groupes NCO libres contenus dans le prépolymère A) réagissent avec lui.

14. Procédé de préparation de dispersions aqueuses selon la revendication 13) dans lequel à l'étape iii), l'agent d'allongement de chaîne B) est ajouté en une quantité telle qu'entre 5 et 50 % des groupes NCO libres contenus dans le prépolymère A) réagissent avec lui.

15. Utilisation de dispersions aqueuses telles que décrites dans les revendications 1) à 9) pour l'enduction de cuir, tissus, papier, carton, plastique, bois ou métaux avec des films d'opacité élevée.
